(19) Europäisches Patentamt
European Patent Office
Office européen des brevets

(11) **EP 3 429 891 B1**

(12) **EUROPÄISCHE PATENTSCHRIFT**

(45) Veröffentlichungstag und Bekanntmachung des Hinweises auf die Patenterteilung:
**19.06.2024   Patentblatt 2024/25**

(21) Anmeldenummer: **17706730.3**

(22) Anmeldetag: **21.02.2017**

(51) Internationale Patentklassifikation (IPC):
**B60Q 1/08** *(2006.01)*      **F21S 41/143** *(2018.01)*
**F21S 41/155** *(2018.01)*     **F21S 41/255** *(2018.01)*
**F21S 41/20** *(2018.01)*      **F21S 41/43** *(2018.01)*
**F21S 41/64** *(2018.01)*

(52) Gemeinsame Patentklassifikation (CPC):
**F21S 41/255; F21S 41/143; F21S 41/155; F21S 41/285; F21S 41/43; F21S 41/645;** F21S 41/153

(86) Internationale Anmeldenummer:
**PCT/EP2017/053904**

(87) Internationale Veröffentlichungsnummer:
**WO 2017/157624 (21.09.2017 Gazette 2017/38)**

(54) **SCHEINWERFER FÜR EIN KRAFTFAHRZEUG**

FLOODLIGHT FOR A MOTOR VEHICLE

PROJECTEUR POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2016   DE 102016204344**

(43) Veröffentlichungstag der Anmeldung:
**23.01.2019   Patentblatt 2019/04**

(73) Patentinhaber: **Bayerische Motoren Werke Aktiengesellschaft 80809 München (DE)**

(72) Erfinder:
• **SIELER, Marcel**
  **Menlo Park, California 94025 (US)**
• **GEHB, Tina**
  **82008 Unterhaching (DE)**
• **HAUSMANN, Thomas**
  **81369 Muenchen (DE)**

(56) Entgegenhaltungen:
EP-A2- 2 682 306          WO-A1-2005/086125
WO-A1-2014/164792         DE-A1-102013 020 753
DE-A1-102014 213 636      DE-U1-202008 014 870

**Beschreibung**

Die Erfindung betrifft einen Scheinwerfer für ein Kraftfahrzeug, insbesondere einen Frontscheinwerfer.

Aus dem Stand der Technik sind viele unterschiedliche Prinzipien bekannt, wie vorbestimmte Lichtverteilungen mit einem Kraftfahrzeugscheinwerfer generiert werden können. In der Druckschrift WO 2015/058227 A1 wird in einem Kraftfahrzeugscheinwerfer ein Mikroprojektions-Lichtmodul eingesetzt, bei dem über eine Vielzahl von Mikrooptiken eine Lichtverteilung vor dem Kraftfahrzeug generiert wird. Dabei ist zwischen einer Eintrittsoptik und einer Austrittsoptik, die jeweils eine Vielzahl von Mikrolinsen umfassen, eine Blendenvorrichtung vorgesehen, mit der z.B. eine Abblendlichtverteilung erzeugt werden kann.

Herkömmliche Kraftfahrzeugscheinwerfer basierend auf Mikroprojektionstechnik ermöglichen zwar eine hochpräzise Generierung von Lichtverteilungen. Jedoch können mit solchen Scheinwerfern bis dato keine weitergehenden Lichteffekte generiert werden.

In dem Dokument WO 2014/164792 A1 ist eine Beleuchtungsvorrichtung gezeigt, die als Scheinwerfer in einem Kraftfahrzeug eingesetzt werden kann. Die Beleuchtungsvorrichtung umfasst einen Beleuchtungskörper mit einer Vielzahl von Projektionslinsen, wobei auf einer Deckplatte eine Symbolik aufgebracht sein kann, die im abgeschalteten Zustand der Beleuchtungsvorrichtung sichtbar ist.

Aufgabe der Erfindung ist es, einen Kraftfahrzeugscheinwerfer basierend auf Mikroprojektionstechnik mit einem zusätzlichen Lichteffekt zu schaffen.

Diese Aufgabe wird durch den Scheinwerfer gemäß Patentanspruch 1 gelöst. Weiterbildungen der Erfindung sind in den abhängigen Ansprüchen definiert.

Der erfindungsgemäße Scheinwerfer ist für ein Kraftfahrzeug, wie z.B. einen PKW, vorgesehen. Vorzugsweise ist der Scheinwerfer ein Frontscheinwerfer. Der Scheinwerfer umfasst ein Multiapertur-Projektionsdisplay mit einem Leuchtmittel und einem flächigen Bildgeber sowie einem Array aus Projektionslinsen, wobei jede Projektionslinse einem Segment des flächigen Bildgebers zugeordnet ist, so dass bei Beleuchtung des Arrays mit dem Leuchtmittel zumindest ein Teil der Segmente durch die zugeordneten Projektionslinsen vor den Scheinwerfer projiziert wird, um zumindest eine Lichtverteilung zu erzeugen.

Im erfindungsgemäßen Scheinwerfer sind vorbestimmte Segmente aus den Segmenten des flächigen Bildgebers in einem oder mehreren Teilbereichen des flächigen Bildgebers derart ausgestaltet und zueinander angeordnet, dass bei ausgeschaltetem Leuchtmittel auf dem flächigen Bildgeber eine durch einen Betrachter wahrnehmbare Symbolik bei einem Blickwinkel des Betrachters in einem vorbestimmten Blickwinkelbereich auf den Scheinwerfer (d.h. auf die Lichtaustrittsöffnung des Scheinwerfers) dargestellt ist. Der vorbestimmte Blickwinkelbereich umfasst die Blickrichtung senkrecht auf den flächigen Bildgeber. Je nach Ausgestaltung kann der Blickwinkelbereich unterschiedlich groß sein. Gegebenenfalls kann die Symbolik auch im Wesentlichen im gesamten Winkelbereich von 180° vor dem Scheinwerfer für den Betrachter sichtbar sein. In einer bevorzugten Variante umfasst das Multiapertur-Projektionsdisplay neben dem Array aus Projektionslinsen auch ein Array aus Feldlinsen, welches zwischen dem Leuchtmittel und dem flächigen Bildgeber angeordnet ist. Als Leuchtmittel werden im Projektionsdisplay vorzugsweise eine oder mehrere LEDs bzw. ggf. auch eine oder mehrere Laserdioden verwendet.

Der erfindungsgemäße Scheinwerfer weist den Vorteil auf, dass auf einfache Weise über entsprechend ausgestaltete Segmente bei ausgeschaltetem Scheinwerfer der Effekt einer sichtbaren Symbolik erzeugt wird. Der Begriff der Symbolik ist dabei weit zu verstehen. Die Symbolik kann insbesondere Text und/oder ein oder mehrere Piktogramme (z.B. Logos) und dergleichen enthalten. Zum Beispiel kann die Symbolik ein Logo und/oder den Schriftzug eines Kraftfahrzeugherstellers repräsentieren.

In einer besonders bevorzugten Ausführungsform wird im erfindungsgemäßen Scheinwerfer ein Multiapertur-Projektionsdisplay verwendet, welches in dem Dokument DE 10 2009 024 894 A1 bzw. in dem Dokument DE 10 2011 076 083 A1 beschrieben ist. Der gesamte Offenbarungsgehalt dieser Druckschriften wird durch Verweis zum Inhalt dieser Anmeldung gemacht.

Im erfindungsgemäßen Scheinwerfer sind die vorbestimmten Segmente derart ausgestaltet und zueinander angeordnet, dass auch bei angeschaltetem Leuchtmittel auf dem flächigen Bildgeber die Symbolik bei einem Blickwinkel des Betrachters in einem vorgegebenen Blickwinkelbereich auf den Scheinwerfer dargestellt ist. Der vorgegebene Blickwinkelbereich muss dabei nicht zwangsläufig mit dem obigen vorbestimmten Blickwinkelbereich bei ausgeschaltetem Scheinwerfer übereinstimmen. Im Besonderen kann der vorgegebene Blickwinkelbereich die Blickrichtung senkrecht auf den flächigen Bildgeber umfassen, jedoch kann der vorgegebene Blickwinkelbereich auch einen Blickwinkelbereich ausschließen, der die Blickrichtung senkrecht auf den flächigen Bildgeber enthält.

In einer weiteren bevorzugten Ausführungsform des erfindungsgemäßen Scheinwerfers sind eines oder mehrere der vorbestimmten Segmente jeweils auf ihrer gesamten Fläche lichtundurchlässig oder sie weisen auf ihrer gesamten Fläche einen Transmissionsgrad von weniger als 100 %, insbesondere von weniger als 50 %, auf. Gemäß dieser Variante wird sichergestellt, dass die Symbolik auch bei angeschaltetem Leuchtmittel in Blickrichtung senkrecht auf den flächigen Bildgeber sichtbar ist.

In einer weiteren Variante des erfindungsgemäßen Scheinwerfers umfassen eines oder mehrere der vorbestimmten Segmente jeweils eine lichtdurchlässige Öffnung (d.h. mit einem Transmissionsgrad von im Wesentlichen 100%). Vorzugsweise ist das jeweilige vorbestimmte Segment bis auf die lichtdurchlässige Öffnung komplett lichtundurchlässig. Die lichtdurchlässige Öffnung ist in einer bevorzugten Variante in Draufsicht auf das jeweilige vorbestimmte Segment mittig angeordnet. Durch die Verwendung von lichtdurchlässigen Öffnungen können in der durch den Scheinwerfer generierten Lichtverteilung bestimmte Bereiche (sog. Hotspots) in ihrer Helligkeit erhöht werden.

In einer besonders bevorzugten Variante des erfindungsgemäßen Scheinwerfers überschreitet die Ausdehnung eines jeweiligen Segments in vertikaler und horizontaler Richtung (d.h. in Breitenrichtung und in Höhenrichtung des Kraftfahrzeugs bei eingebautem Scheinwerfer) den Durchmesser der zugeordneten (runden) Projektionslinse nicht. Der Durchmesser einer jeweiligen Projektionslinse liegt vorzugsweise bei 2000 $\mu$m oder weniger, insbesondere bei 1000 $\mu$m oder weniger, z.B. bei 800 $\mu$m. Das Multiapertur-Projektionsdisplay umfasst in Draufsicht auf den flächigen Bildgeber vorzugsweise 1000 bis 5000 Segmente mit zugeordneten Projektionslinsen.

In einer Ausgestaltung des erfindungsgemäßen Scheinwerfers umfasst der Bildgeber ein durchsichtiges Substrat (d.h. mit einem Transmissionsgrad von im Wesentlichen 100%) mit darauf aufgebrachten lichtundurchlässigen Bereichen und/oder darauf aufgebrachten Bereichen mit einem Transmissionsgrad von weniger als 100 %, insbesondere von weniger als 50 %. Die darauf aufgebrachten Bereiche können beispielsweise durch eine Chrommaske gebildet werden. Das durchsichtige Substrat ist vorzugsweise ein Glassubstrat. Der Scheinwerfer gemäß dieser Variante kann einfach und kostengünstig hergestellt werden.

In einer weiteren Ausführungsform des erfindungsgemäßen Verfahrens umfasst der flächige Bildgeber einen digitalen Bildgeber, insbesondere ein LCD-Display (wie z.B. ein TFT-Display). Dieser digitale Bildgeber ist derart ansteuerbar, dass die Struktur der Segmente variiert werden kann, so dass unterschiedliche Lichteffekte erzeugt werden können. Vorzugsweise ist der digitale Bildgeber derart ansteuerbar, dass unterschiedliche Symboliken auf dem digitalen Bildgeber in Abhängigkeit von dessen Ansteuerung darstellbar sind.

In einer weiteren Variante ist der erfindungsgemäße Scheinwerfer derart ansteuerbar, dass beim Anschalten des Leuchtmittels die Projektionslinsen des Arrays und damit auch die Segmente sukzessive beleuchtet werden, bis das gesamte Array beleuchtet ist. Beispielsweise kann die sukzessive Beleuchtung in horizontaler Richtung oder in vertikaler Richtung des flächigen Bildgebers oder gegebenenfalls auch in schräger Richtung durchgeführt werden. Mit dieser Variante kann ein ansprechender Lichteffekt in der Form einer allmählich aufleuchtenden Symbolik generiert werden.

Mit dem erfindungsgemäßen Scheinwerfer können je nach Ausgestaltung unterschiedliche Lichtverteilungen erzeugt werden. Insbesondere kann mit dem Multiapertur-Projektionsdisplay eine Abblendlichtverteilung und/oder eine Fernlichtverteilung und/oder ein blendfreies Fernlicht generiert werden. Auch andere Arten von Lichtverteilungen sind möglich. Im Falle einer Abblendlichtverteilung sind die Segmente, welche keine vorbestimmten Segmente sind, jeweils als eine Blende mit einer vorgegebenen Hell-Dunkel-Grenze ausgebildet.

Neben dem oben beschriebenen Scheinwerfer betrifft die Erfindung ferner ein Kraftfahrzeug, wobei das Kraftfahrzeug einen oder mehrere der erfindungsgemäßen Scheinwerfer bzw. eine oder mehrere bevorzugte Varianten dieses Scheinwerfers umfasst.

Ausführungsbeispiele der Erfindung werden nachfolgend anhand der beigefügten Figuren detailliert beschrieben.

Es zeigen:

Fig. 1      eine Schnittansicht eines bekannten Multiapertur-Projektionsdisplays;

Fig. 2      eine perspektivische Ansicht zur Verdeutlichung der Projektion des Multiapertur-Projektionsdisplays aus Fig. 1;

Fig. 3      eine Draufsicht auf eine erfindungsgemäße Ausführungsform eines Multiapertur-Projektionsdisplays im Kalterscheinungsbild bei ausgeschaltetem Scheinwerfer; und

Fig. 4      eine Detailansicht auf einen Ausschnitt des Multiapertur-Projektionsdisplays aus Fig. 3 an einer Grenze des Logos.

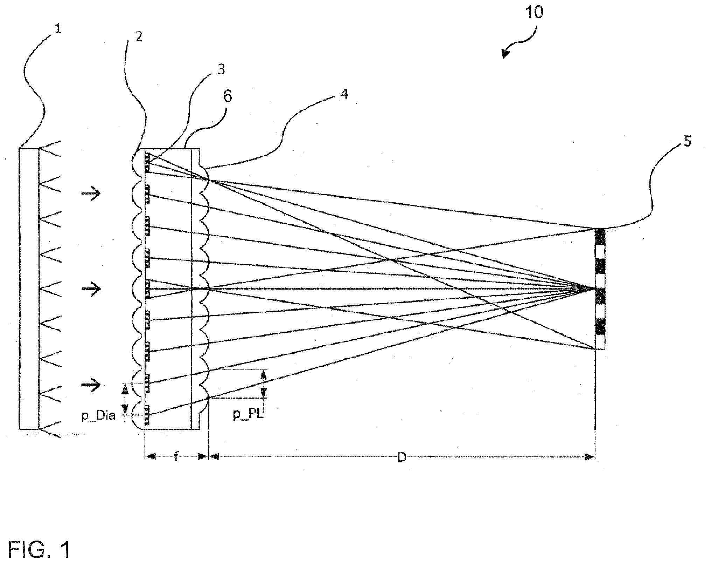

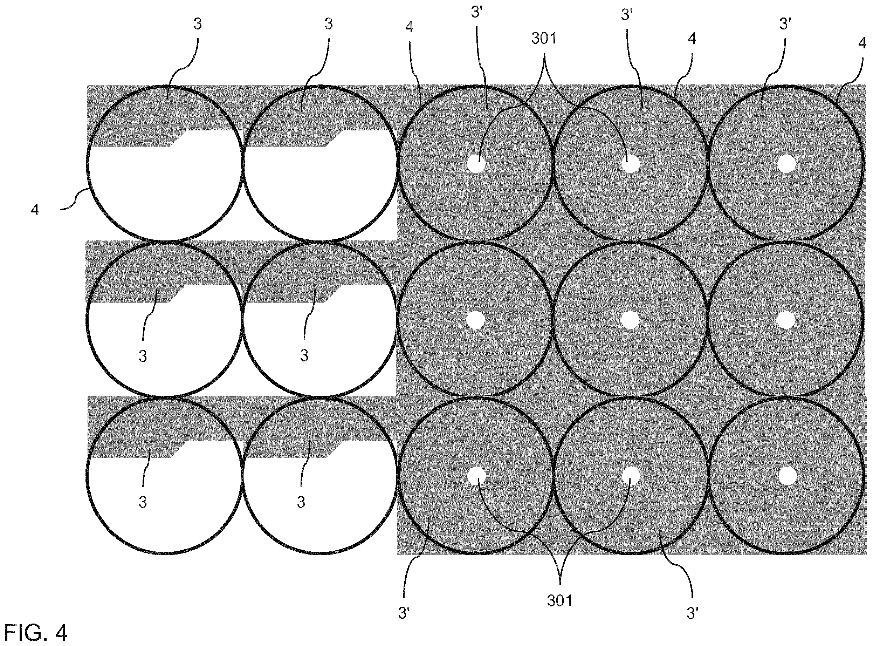

Fig. 1 zeigt ein an sich bekanntes Multiapertur-Projektionsdisplay, welches aus der Druckschrift DE 10 2009 024 894 A1 bekannt ist. Dieses Projektionsdisplay kommt in abgewandelter Form im erfindungsgemäßen Scheinwerfer zum Einsatz. Das Projektionsdisplay 10 umfasst ein Leuchtmittel 1, welches z.B. als Laserdiode oder LED oder OLED ausgeführt sein kann. Das Licht des Leuchtmittels fällt auf ein Feldlinsen-Array in der Form einer Vielzahl von Kondensorlinsen 2, die auf einem Substrat 6 (z. B. Glassubstrat) aufgebracht sind, wobei sich benachbart zu jeder Kondensorlinse 2 ein Segment 3 mit einer dort ausgebildeten Objektstruktur aus transmittiven und lichtundurchlässigen Bereichen befindet. Die lichtundurchlässigen Bereiche der Objektstrukturen werden durch eine auf das Substrat aufgebrachte Chrommaske gebildet. Das Substrat mit der Chrommaske stellt eine Ausführungsform eines flächigen Bildgebers im Sinne der Ansprüche dar. Das Projektionsdisplay der weiter unten beschriebenen Ausführungsform des erfindungsgemäßen Scheinwerfers unterscheidet sich gegenüber dem Display der Fig. 1 darin, dass einige der Segmente 3 durch Segmente 3' (siehe Fig. 4) ersetzt werden. Mittels der Ausgestaltung und Anordnung der Segmente 3' wird erreicht, dass in Draufsicht auf das Display bei abgeschaltetem Leuchtmittel 1 ein Logo für den Betrachter sichtbar ist, wie weiter unten näher erläutert wird.

Auf der Seite des Glassubstrats, welche der Seite mit den Objektstrukturen gegenüberliegt, befindet sich ein Array aus Projektionslinsen 4, wobei der Abstand zwischen den Projektionslinsen und den Objektstrukturen 3 im Wesentlichen der Brennweite f der einzelnen Projektionslinsen entspricht. Jede Projektionslinse ist einer Objektstruktur eines entsprechenden Segments 3 zugeordnet. Die Objektstruktur wird über die entsprechende Projektionslinse in die Projektionsebene 5 im Abstand D von dem Array der Projektionslinsen abgebildet. Dies wird durch die dargestellten Strahlengänge verdeutlicht. Man erkennt dabei, dass der Pitch-Abstand p_Dia zwischen benachbarten Segmenten 3 größer ist als der Pitch-Abstand p_PL zwischen benachbarten Projektionslinsen 4. Hierdurch wird eine Verkippung der optischen Achsen der entsprechenden Paare von Objektstruktur und Projektionslinse bewirkt und damit eine Überlagerung aller projizierten Bilder der Objektstrukturen aller Segmente 3 zu einem Gesamtbild in der Projektionsebene 5 erreicht. Gegebenenfalls können sich vor den Projektionslinsen 4 noch zusätzliche optische Elemente für eine weitere Lichtfeldformung befinden, wie z.B. zwei Fresnellinsen (eine für eine vertikale Streuung und eine für eine horizontale Streuung).

Die Vergrößerung M des Gesamtbilds in der Projektionsebene 5 folgt aus dem Verhältnis der Projektionsentfernung D zur Brennweite f der Projektionslinsen 4 und lautet wie folgt:

$$M = \frac{D}{f} = \frac{p\_PL}{p\_Dia - p\_PL} \qquad (1)$$

Die Vergrößerung ist somit von dem Unterschied der Pitch-Abstände zwischen den Objektstrukturen und den Projektionslinsen abhängig. Je kleiner dieser Unterschied ist, desto größer ist die Vergrößerung und desto weiter liegt die Projektionsebene von dem Projektionsdisplay entfernt.

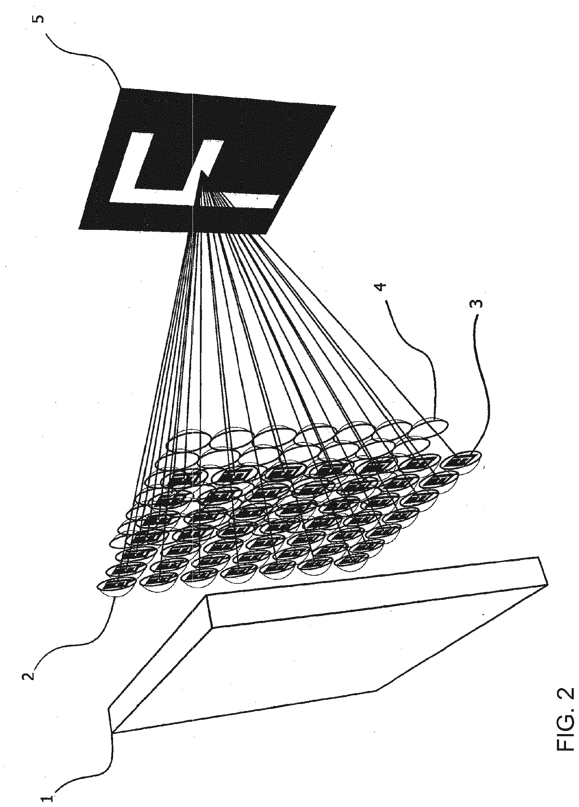

Fig. 2 verdeutlicht nochmals die Bildprojektion der Anordnung der Fig. 1. Beispielhaft sind dabei Objektstrukturen in der Form des transmittiven Buchstabens "F" wiedergegeben. Wie aus Fig. 2 ersichtlich ist, wird dabei jeder einzelne Buchstabe über eine entsprechende Projektionslinse 4 in den gleichen vergrößerten Buchstaben in der Projektionsebene 5 abgebildet. Der Buchstabe in der Projektionsebene 5 ist somit eine Überlagerung der Abbildung von allen Objektstrukturen.

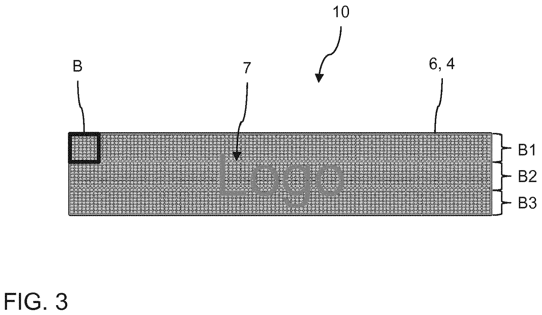

Fig. 3 zeigt eine Draufsicht auf ein Multiapertur-Projektionsdisplay in einer Ausführungsform des erfindungsgemäßen Frontscheinwerfers. Man erkennt in Fig. 3 die Abmessungen des Glassubstrats 6 mit den darauf angeordneten Projektionslinsen 4. Der hierdurch gebildete flächige Bildgeber weist eine rechteckige Form mit einer Längsseite von etwa 10 cm und einer Höhe von etwa 3 cm auf. Als Leuchtmittel wird eine Vielzahl von LEDs verwendet, wobei jede LED einen quadratischen Teilbereich des Bildgebers ausleuchtet. Beispielhaft ist ein solcher quadratischer Bereich im oberen linken Eck des Bildgebers dargestellt und mit Bezugszeichen B bezeichnet. Mit dem Frontscheinwerfer der Fig. 3 kann durch Ansteuerung der entsprechenden LEDs sowohl eine Abblendlichtverteilung mit einer Hell-Dunkel-Grenze als auch ein Fernlicht generiert werden. Der sich in horizontaler Richtung erstreckende mittige Bereich B2 dient dabei zur Generierung des Abblendlichts, wohingegen das Fernlicht durch Zuschalten des oberen und des unteren horizontalen Bereichs B1 und B3 erzeugt wird. Die Darstellung des Displays der Fig. 3 ist lediglich beispielhaft und die Erfindung kann auch in Scheinwerfern realisiert werden, deren Multiapertur-Projektionsdisplay andere Lichtverteilungen und gegebenenfalls auch nur eine Abblendlichtverteilung oder eine Fernlichtverteilung erzeugt.

Ein wesentliches Merkmal des Displays der Fig. 3 besteht darin, dass die Chrommaske in Teilbereichen des Substrats 6 jeweilige Segmente des Bildgebers bis auf eine Öffnung weitestgehend abdeckt, d.h. es werden in diesen Teilbereichen Segmente 3' verwendet, deren Flächen zum Großteil lichtundurchlässig sind. Die Anordnung solcher Segmente ist dabei derart gewählt, dass sich die Struktur einer Symbolik 7 ausbildet, wobei diese Symbolik in dem Ausführungsbeispiel der Fig. 3 beispielhaft durch den Begriff "Logo" repräsentiert wird. Dieses Logo wird u.a. bei senkrechter Draufsicht des Betrachters auf den Bildgeber im Kalterscheinungsbild (d.h. bei abgeschaltetem Leuchtmittel) sichtbar. Das in Fig. 3 dargestellte Logo 7 ist lediglich beispielhaft und es kann auch eine beliebige andere Symbolik wiedergegeben werden. Beispielsweise kann der Name oder das Logo des Herstellers des Kraftfahrzeugs eingeblendet werden, in dem der Scheinwerfer verbaut ist.

Das Logo 7 ist im Kalterscheinungsbild aus fast allen Betrachtungswinkeln vor dem Scheinwerfer sichtbar. Im Falle, dass die Segmente 3' vollflächig lichtundurchlässig sind, ist das Logo auch bei angeschaltetem Scheinwerfer bei senkrechter Draufsicht des Betrachters auf den Bildgeber sowie auch aus bestimmten schrägen Betrachtungswinkeln sichtbar. In einer bevorzugten Variante werden beim Anschalten des Scheinwerfers die einzelnen LEDs sukzessive in horizontaler Richtung von links nach rechts oder gegebenenfalls auch in anderen Richtungen angeschaltet, so dass der ansprechende Effekt des langsamen Aufleuchtens des Logos generiert wird.

In der Ausführungsform des Scheinwerfers der Fig. 3 sind die einzelnen Segmente 3' des Logos 7 nicht vollflächig lichtundurchlässig, sondern sie weisen eine kleine mittlere Öffnung auf. Dies wird aus der Detailansicht der Fig. 4 deutlich. Man erkennt dabei einen Übergangsbereich von einem Bereich des Bildgebers, der zum Generieren der Abblendlichtverteilung dient, zu einem Bereich, in dem das Logo dargestellt wird. Im Bereich der Abblendlichtverteilung werden durch die Segmente bzw. Objektstrukturen 3 Blenden zur Erzeugung der Hell-Dunkel-Grenze in der Abblendlichtverteilung gebildet. Für jede Projektionslinse 4 (nur teilweise mit Bezugszeichen bezeichnet) existiert dabei eine Objektstruktur 3 mit dieser Hell-Dunkel-Grenze. Beim Übergang zu einem Bereich des Logos sind die Segmente 3' nunmehr weitestgehend lichtundurchlässig ausgestaltet, wobei jedoch in jedem der Segmente eine mittige lichtdurchlässige Öffnung 301 vorgesehen ist. Aus Übersichtlichkeitsgründen sind in Fig. 4 die Segmente 3' und die Öffnungen 301 nur teilweise mit Bezugszeichen bezeichnet.

Die Größe der Öffnung 301 liegt vorzugsweise bei 0,1 mm oder weniger, wohingegen der Durchmesser der einzelnen Projektionslinsen 4 beispielsweise bei ca. 0,8 mm liegt. Durch die dargestellten Öffnungen 301 kann in der durch den Scheinwerfer generierten Lichtverteilung ein Hotspot im zentralen Bereich des Lichtfelds erzeugt werden. Das Logo 7 bleibt bei angeschaltetem Leuchtmittel erkennbar, ist jedoch nur noch aus schrägen Betrachtungswinkeln und nicht mehr bei senkrechter Draufsicht auf den flächigen Bildgeber wahrnehmbar.

Die im Vorangegangenen beschriebenen Ausführungsformen der Erfindung weisen eine Reihe von Vorteilen auf. Insbesondere kann durch die Verwendung eines Multiapertur-Projektionsdisplays in einem Kraftfahrzeugscheinwerfer auf einfache Weise eine für den Betrachter sichtbare Symbolik generiert werden. Diese Symbolik ist bei ausgeschaltetem Scheinwerfer in einem großen Blickwinkelbereich erkennbar. Ferner ist die Symbolik auch bei angeschaltetem Scheinwerfer zumindest aus bestimmten Betrachtungswinkeln wahrnehmbar. Darüber hinaus können durch ein sukzessives Anschalten des Leuchtmittels des Scheinwerfers ansprechende Effekte eines Aufleuchtens der Symbolik generiert werden.

**Bezugszeichenliste**

| | |
|---|---|
| 1 | Leuchtmittel |
| 2 | Kondensorlinsen |
| 3, 3', | Segmente |
| 4 | Projektionslinsen |
| 5 | Projektionsebene |
| 6 | Glassubstrat |
| 7 | Symbolik |
| 10 | Multiapertur-Projektionsdisplay |
| B, B1, B2, B3 | Bereiche des Multiapertur-Projektionsdisplays |

**Patentansprüche**

1. Scheinwerfer für ein Kraftfahrzeug, insbesondere Frontscheinwerfer, umfassend ein Multiapertur-Projektionsdisplay (10) mit einem Leuchtmittel (1) und einem flächigen Bildgeber (3, 3', 6) sowie einem Array aus Projektionslinsen (4), wobei jede Projektionslinse (4) einem Segment (3, 3', 6) des flächigen Bildgebers (3, 3', 6) zugeordnet ist, so dass bei Beleuchtung des Arrays mit dem Leuchtmittel (1) zumindest ein Teil der Segmente (3, 3') durch die zugeordneten Projektionslinsen (4) vor den Scheinwerfer projiziert wird, um zumindest eine Lichtverteilung zu erzeugen, wobei vorbestimmte Segmente (3') aus den Segmenten (3, 3') des flächigen Bildgebers (3, 3', 6) in einem oder mehreren Teilbereichen des flächigen Bildgebers (3, 3', 6) derart ausgestaltet und zueinander angeordnet sind, dass bei ausgeschaltetem Leuchtmittel (1) auf dem flächigen Bildgeber (3, 3', 6) eine durch einen Betrachter wahrnehmbare Symbolik (7) bei einem Blickwinkel des Betrachters in einem vorbestimmten Blickwinkelbereich auf den Scheinwerfer umfassend die Blickrichtung senkrecht auf den flächigen Bildgeber (3, 3', 6) dargestellt ist,
**dadurch gekennzeichnet, dass**
die vorbestimmten Segmente (3') derart ausgestaltet und zueinander angeordnet sind, dass bei angeschaltetem Leuchtmittel (1) auf dem flächigen Bildgeber (3, 3', 6) die Symbolik (7) bei einem Blickwinkel des Betrachters in einem vorgegebenen Blickwinkelbereich auf den Scheinwerfer dargestellt ist, wobei der vorgegebene Blickwinkelbereich die Blickrichtung senkrecht auf den flächigen Bildgeber (3, 3', 6) umfasst oder einen Winkelbereich ausschließt, der die Blickrichtung senkrecht auf den flächigen Bildgeber (3, 3', 6) enthält.

2. Scheinwerfer nach Anspruch 1, **dadurch gekennzeichnet, dass** eines oder mehrere der vorbestimmten Segmente (3') jeweils auf ihrer gesamten Fläche lichtundurchlässig sind oder einen Transmissionsgrad von weniger als 100% aufweisen.

3. Scheinwerfer nach einem der vorhergehenden Ansprüche, **dadurch gekennzeichnet, dass** eines oder mehrere der vorbestimmten Segmente (3') jeweils eine lichtdurchlässige Öffnung (301) umfassen und vorzugsweise bis auf die lichtdurchlässige Öffnung (301) lichtundurchlässig sind.

4. Scheinwerfer nach Anspruch 3, **dadurch gekennzeichnet, dass** die lichtdurchlässige Öffnung (301) in Draufsicht auf das jeweilige vorbestimmte Segment (3') mittig angeordnet ist.

5. Scheinwerfer nach einem der vorhergehenden Ansprüche, **dadurch gekennzeichnet, dass** die Ausdehnung eines jeweiligen Segments (3) in vertikaler und horizontaler Richtung den Durchmesser der zugeordneten Projektionslinse (4) nicht überschreitet.

**6.** Scheinwerfer nach einem der vorhergehenden Ansprüche, **dadurch gekennzeichnet, dass** der Durchmesser einer jeweiligen Projektionslinse (4) bei 2000 μm oder weniger, insbesondere bei 1000 μm oder weniger, liegt und/der dass das Multiapertur-Projektionsdisplay in Draufsicht auf den flächigen Bildgeber (3, 3', 6) 1000 bis 5000 Segmente (3, 3') mit zugeordneten Projektionslinsen (4) umfasst.

**7.** Scheinwerfer nach einem der vorhergehenden Ansprüche, **dadurch gekennzeichnet, dass** der Bildgeber (3, 3', 6) ein durchsichtiges Substrat (6) mit darauf aufgebrachten lichtundurchlässigen Bereichen und/oder darauf aufgebrachten Bereichen mit einem Transmissionsgrad von weniger als 100% umfasst.

**8.** Scheinwerfer nach einem der vorhergehenden Ansprüche, **dadurch gekennzeichnet, dass** der flächige Bildgeber (3, 3',6) einen digitalen Bildgeber, insbesondere ein LCD-Display, umfasst, welcher derart ansteuerbar ist, dass die Struktur der Segmente (3, 3') variiert werden kann, wobei der digitale Bildgeber vorzugsweise derart ansteuerbar ist, dass unterschiedliche Symboliken (7) auf dem digitalen Bildgeber darstellbar sind.

**9.** Scheinwerfer nach einem der vorhergehenden Ansprüche, **dadurch gekennzeichnet, dass** der Scheinwerfer derart ansteuerbar, dass beim Anschalten des Leuchtmittels (1) die Projektionslinsen des Arrays sukzessive beleuchtet werden, bis das gesamte Array beleuchtet ist.

**10.** Scheinwerfer nach einem der vorhergehenden Ansprüche, **dadurch gekennzeichnet, dass** mit dem Multiapertur-Projektionsdisplay (10) eine Abblendlichtverteilung und/oder eine Fernlichtverteilung und/oder ein blendfreies Fernlicht erzeugbar ist.

**11.** Kraftfahrzeug, **dadurch gekennzeichnet, dass** das Kraftfahrzeug einen oder mehrere Scheinwerfer nach einem der vorhergehenden Ansprüche umfasst.

**Claims**

**1.** Headlamp for a motor vehicle, in particular front headlamp, comprising a multi-aperture projection display (10) with an illuminant (1) and an areal image generator (3, 3', 6), and an array of projection lenses (4), wherein each projection lens (4) is assigned to a segment (3, 3', 6) of the areal image generator (3, 3', 6) such that, when the array is illuminated by the illuminant (1), at least some of the segments (3, 3') are projected in front of the headlamp by the assigned projection lenses (4) in order to produce at least one light distribution, wherein predetermined segments (3') of the segments (3, 3') of the areal image generator (3, 3', 6) are configured and arranged in relation to one another in one or more portions of the areal image generator (3, 3', 6) in such a way that, when the illuminant (1) is switched off, imagery (7) that is perceivable by an observer is presented on the areal image generator (3, 3', 6) at a viewing angle of the observer in a predetermined viewing angle range towards the headlamp, which comprises the viewing direction perpendicular to the areal image generator (3, 3', 6), **characterized in that**

the predetermined segments (3') are configured and arranged in relation to one another in such a way that, when the illuminant (1) is activated, the imagery (7) is presented on the areal image generator (3, 3', 6) at a viewing angle of the observer in a specified viewing angle range towards the headlamp, wherein the specified viewing angle range comprises the viewing direction perpendicular to the areal image generator (3, 3', 6) or excludes an angle range that contains the viewing direction perpendicular to the areal image generator (3, 3', 6).

**2.** Headlamp according to Claim 1, **characterized in that** one or more of the predetermined segments (3') each are opaque over their entire area or each have a transmittance of less than 100%.

**3.** Headlamp according to either of the preceding claims, **characterized in that** one or more of the predetermined segments (3') each comprise a light-transmissive aperture (301) and preferably are opaque apart from the light-transmissive aperture (301).

**4.** Headlamp according to Claim 3, **characterized in that** the light-transmissive aperture (301) is arranged centrally in a plan view onto the respective predetermined segment (3').

**5.** Headlamp according to any of the preceding claims, **characterized in that** the extent of a respective segment (3) in the vertical and horizontal directions does not exceed the diameter of the assigned projection lens (4).

**6.** Headlamp according to any of the preceding claims, **characterized in that** the diameter of a respective projection lens (4) is 2000 μm or less, in particular 1000 μm or less, and/or **in that** the multi-aperture projection display comprises 1000 to 5000 segments (3, 3') with assigned projection lenses (4) in the plan view onto the areal image generator (3, 3', 6).

**7.** Headlamp according to any of the preceding claims, **characterized in that** the image generator (3, 3', 6) comprises a transparent substrate (6) with opaque regions applied thereon and/or with regions with a transmittance of less than 100% applied thereon.

8. Headlamp according to any of the preceding claims, **characterized in that** the areal image generator (3, 3', 6) comprises a digital image generator, in particular an LCD display, which is actuatable in such a way that the structure of the segments (3, 3') can be varied, wherein the digital image generator is preferably actuatable in such a way that different imagery (7) is presentable on the digital image generator.

9. Headlamp according to any of the preceding claims, **characterized in that** the headlamp is actuatable in such a way that, upon activation of the illuminant (1), the projection lenses of the array are illuminated in succession until the entire array is illuminated.

10. Headlamp according to any of the preceding claims, **characterized in that** a low beam distribution and/or a high beam distribution and/or an antiglare high beam are producible by means of the multi-aperture projection display (10).

11. Motor vehicle, **characterized in that** the motor vehicle comprises one or more headlamps according to any of the preceding claims.

## Revendications

1. Phare pour un véhicule automobile, en particulier phare avant, comprenant un affichage de projection à ouvertures multiples (10) pourvu d'un moyen lumineux (1) et d'un imageur plat (3, 3', 6) ainsi que d'un réseau de lentilles de projection (4), dans lequel chaque lentille de projection (4) est associée à un segment (3, 3', 6) de l'imageur plat (3, 3', 6) de sorte que lorsque le réseau est éclairé par le moyen lumineux (1), au moins une partie des segments (3, 3') est projetée par les lentilles de projection associées (4) devant le phare afin de générer au moins une distribution de lumière, dans lequel des segments (3') prédéterminés parmi les segments (3, 3') de l'imageur plat (3, 3', 6) sont configurés et disposés les uns par rapport aux autres dans une ou plusieurs zones partielles de l'imageur plat (3, 3', 6) de telle sorte que lorsque le moyen lumineux (1) est débranché, un symbole (7) perceptible par un observateur est représenté sur l'imageur plat (3, 3', 6) pour un angle de vision de l'observateur dans une plage d'angle de vision prédéterminée sur le phare, y compris la direction de vision perpendiculaire sur l'imageur plat (3, 3', 6), **caractérisé en ce que** les segments prédéterminés (3') sont configurés et disposés les uns par rapport aux autres de telle sorte que lorsque le moyen lumineux (1) est branché, le symbole (7) est représenté sur l'imageur plat (3, 3', 6) pour un angle de vision de l'observateur dans une plage d'angle de vision prédéfinie sur le phare, dans lequel la plage d'angle de vision prédéfinie comprend la direction de vision perpendiculaire sur l'imageur plat (3, 3', 6) ou exclut une plage d'angle comportant la direction de vision perpendiculaire sur l'imageur plat (3, 3', 6).

2. Phare selon la revendication 1, **caractérisé en ce qu'**un ou plusieurs des segments (3') prédéterminés sont respectivement opaques sur toute leur surface ou présentent un facteur de transmission inférieur à 100 %.

3. Phare selon l'une quelconque des revendications précédentes, **caractérisé en ce qu'**un ou plusieurs des segments (3') prédéterminés comprennent respectivement une ouverture transparente (301) et sont de préférence opaques à l'exception de l'ouverture transparente (301).

4. Phare selon la revendication 3, **caractérisé en ce que** l'ouverture transparente (301) est disposée au milieu en vue de dessus sur le segment (3') prédéterminé respectif.

5. Phare selon l'une quelconque des revendications précédentes, **caractérisé en ce que** l'étendue du segment (3) respectif dans la direction verticale et horizontale ne dépasse pas le diamètre de la lentille de projection (4) associée.

6. Phare selon l'une quelconque des revendications précédentes, **caractérisé en ce que** le diamètre d'une lentille de projection (4) respective est de 2000 $\mu$m ou moins, en particulier de 1000 $\mu$m ou moins, et/ou **en ce que** l'affichage de projection à ouvertures multiples comprend en vue de dessus sur l'imageur plat (3, 3', 6) de 1000 à 5000 segments (3, 3') avec des lentilles de projection (4) associées.

7. Phare selon l'une quelconque des revendications précédentes, **caractérisé en ce que** l'imageur (3, 3', 6) comprend un substrat transparent (6) pourvu de zones opaques appliquées à celui-ci et/ou de zones d'un facteur de transmission inférieur à 100 %, appliquées à celui-ci .

8. Phare selon l'une quelconque des revendications précédentes, **caractérisé en ce que** l'imageur plat (3, 3', 6) comprend un imageur numérique, en particulier un affichage LCD, qui peut être piloté de telle sorte que la structure des segments (3, 3') peut varier, dans lequel l'imageur numérique peut de préférence être piloté de telle sorte que différents symboles (7) peuvent être représentés sur l'imageur numérique.

**9.** Phare selon l'une quelconque des revendications précédentes, **caractérisé en ce que** le phare peut être piloté de telle sorte que lorsque le moyen lumineux (1) est branché, les lentilles de projection du réseau sont éclairées successivement jusqu'à ce que l'ensemble du réseau soit éclairé.

**10.** Phare selon l'une quelconque des revendications précédentes, **caractérisé en ce que** l'affichage de projection à ouvertures multiples (10) permet de générer une distribution des feux de croisement et/ou une distribution des feux de route sans éblouissement.

**11.** Véhicule automobile, **caractérisé en ce que** le véhicule automobile comprend un ou plusieurs phares selon l'une quelconque des revendications précédentes.

FIG. 1

FIG. 2

EP 3 429 891 B1

FIG. 3

FIG. 4

**IN DER BESCHREIBUNG AUFGEFÜHRTE DOKUMENTE**

**In der Beschreibung aufgeführte Patentdokumente**

- WO 2015058227 A1
- WO 2014164792 A1
- DE 102009024894 A1
- DE 102011076083 A1